# EUROPÄISCHE PATENTSCHRIFT

(11) **EP 0 748 971 B1**
(45) Veröffentlichungstag und Bekanntmachung des Hinweises auf die Patenterteilung: **31.03.1999**
(21) Anmeldenummer: 96250114.4
(22) Anmeldetag: 22.05.1996
(51) Int. Cl.: F16L 1/028, F16L 55/165, E21B 7/26

(54) **Verfahren und Vorrichtung zum grabenlosen Entfernen und Auswechseln erdverlegter Blei- und Kunststoffrohre**
Method and device for removing, without excavation, lead and plastic pipes laid in the ground
Procédé et dispositif pour enlever, sans excavation, des tuyaux en plastique ou en plomp poses dans le sol

(30) Priorität: 16.06.1995 DE 19522579
(43) Veröffentlichungstag der Anmeldung: 18.12.1996
(73) Patentinhaber: Berliner Wasserbetriebe Anstalt d. öffentlichen Rechts, 10713 Berlin-Wilmersdorf (DE)
(72) Erfinder: Gaebelein, Wilhelm, Dr.-Ing., 14163 Berlin (DE); Wilinski, Erich, Dr.-Ing., 10179 Berlin (DE)

(56) Entgegenhaltungen:
- EP-A- 0 411 278
- CH-A- 680 776
- DE-A- 3 942 934
- DE-A- 4 308 654
- DE-C- 3 832 214

## Beschreibung

Die Erfindung betrifft ein Verfahren zum grabenlosen Auswechseln von in Leitungsnetzen eingesetzten erdverlegten Blei- oder Kunststoffrohren und eine Vorrichtung zur Durchführung des Verfahrens.

Es sind Verfahren und Vorrichtungen für kleine Dimensionen nach der DE 38 19 820 und EP 0 346 267 und für größere Dimensionen nach der DE 39 25 504 bekannt, mit denen Rohrleitungen ohne Aufgraben der gesamten Trasse aus dem Erdreich entfernt und neue Rohre in die vorhandene Öffnung eingezogen werden. Dabei wird das Altrohr mit Seilen oder Gestängen verbunden und mit Hilfe von hydraulischen Winden oder Apparaten aus dem Erdreich gezogen oder geschoben. Das neue Rohr ist an das Altrohr angekoppelt und wird bei Bedarf unter Zwischenschaltung eines Aufweitkegels in den Hohlraum eingezogen. Bei relativ sprödem Material wird das Altrohr in der Maschinenbaugrube durch Spaltvorrichtungen zerkleinert. Andere Materialien werden in handhabbare Längen geteilt.
Um ein eventuelles Abreißen des Altrohres während des Ziehvorgangs zu vermeiden, werden hochfeste Zugstangen, deren Länge durch die Größe der Maschinenbaugrube begrenzt ist, miteinander verschraubt, durch das Altrohr geschoben und am anderen Rohrende mit einer Sicherungseinrichtung versehen. Das Altrohr wird anschliessend mittels einer hydraulischen Zugvorrichtung aus dem Erdreich gezogen.
In Zugrichtung hinter der Sicherungseinrichtung kann ein Aufweitkegel befestigt werden, an den ein Hüllrohr oder das neue Produktenrohr angekoppelt ist. In dem Maße, wie das auszuwechselnde Rohr aus dem Boden gezogen wird, wird das Hüllrohr oder das Produktenrohr in die freiwerdende Öffnung eingezogen. In der Maschinenbaugrube wird das Altrohr entweder stückweise abgetrennt oder über einen Spaltkegel gebrochen. Die Zugstangen werden abschnittsweise abgeschraubt und aus der Baugrube entfernt.

Nach einem weiteren Verfahren gemäß DE 39 40 354 werden vornehmlich Graugußoder Stahlrohre mittels Plasma- oder Druckwasserschneiden in Längsrichtung getrennt. Nach diesem Vorgang wird auf eine Erdrakete eine ringförmige Schneidvorrichtung aufgesetzt und vorgetrieben, die den das Altrohr umgebenden Boden vom Rohr trennt. Durch Einpressen von Bentonit in den entstehenden Ringraum soll das Herausziehen der längsgetrennten Rohre aus dem Erdreich erleichtert werden.
Das Verfahren löst nicht das Auswechseln des Altrohres gegen ein neues Rohr und verlangt aufgrund der nacheinander und unabhängig voneinander ablaufenden Verfahrensschritte einen hohen Arbeitsaufwand.

Es ist ein Verfahren für die Auswechselung von Bleirohren bekannt.
Hierbei wird nach Kalibrierung des auszuwechselnden Bleirohres in dieses eine Einheit bestehend aus Zugseil und Druckschlauch eingezogen. Die Längskraftschlüssigkeit zwischen Bleirohr und Seil wird durch den Schlauch hergestellt, der unter Druck gesetzt das Seil an die Rohrwand anpreßt. Mittels einer Winde wird die Einheit Bleirohr, Seil und Schlauch aus dem Boden gezogen, das Bleirohr vom Seil und Druckschlauch getrennt und das neue Produktenrohr gleichzeitig eingezogen. Dem Verfahren haftet der Nachteil an, daß eine Kalibrierung des auszuwechselnden Rohres erforderlich ist und die Bergung des Druckschlauches häufig zu dessen Zerstörung führt.

Ein weiteres Verfahren, beschrieben in der Zeitschrift Tiefbau, Ingenieurbau, Straßenbau vom Juni 1992, S. 443 - 446, sieht für die Auswechselung von Bleirohren das Eingießen eines Seils mit Gießharz in das gründlich vorgereinigte Bleirohr vor, um das Rohr zu stabilisieren.
Das Herausziehen des Rohres erfolgt mittels eines Stoßhebers.
Nachteile dieses Verfahrens bestehen in der notwendigen aufwendigen Reinigung der Rohrinnenfläche, der langen Aushärtezeit und des großen apparativen Aufwandes für die Gießharzaufbereitung.

Die genannten Verfahren sind zeitaufwendig und kostenintensiv, da sie mehrere Arbeitsgänge und die dazu erforderliche Umrüstung der Aggregate und Geräte erfordern.

Es ist daher Aufgabe der Erfindung, ein Verfahren und eine Vorrichtung derart zu entwickeln, daß zeitaufwendige Umrüstungen für die jeweils nachfolgenden Arbeitsgänge vermieden sowie das sichere Auswechseln von Blei- oder Kunststoffrohren gegen neue Rohre mit geringstmöglichem Energie- und Arbeitsaufwand gleichzeitig erreicht wird.

Erfindungsgemäß wird die Aufgabe durch den Anspruch 1 gelöst. Hiernach wird die alte Rohrleitung durch auf einem Trägerkörper angebrachte, mechanische Trennvorrichtungen von innen aufgeschnitten und durch ein Hüllrohr oder ein Produktenrohr überfahren, wobei die Trennflächen das Hindurchgleiten der Trennvorrichtungen des Überfahrkopfes, der über den Trägerkörper mit einem Seil im Inneren des Altrohres verbunden ist, ermöglichen. Die mechanischen Trennvorrichtungen bestehen vorzugsweise aus Messern. Der vornehmlich konisch gestaltete Überfahrkopf verdrängt während des Vortriebs den das Altrohr umgebenden Boden und bildet dadurch einen Hohlraum in einer auf den Außendurchmesser des Hüll- oder Produktenrohres abgestimmten Größe. Nachdem das an den Überfahrkopf angekoppelte Hüllrohr oder das Produktenrohr in der Maschinenbaugrube angekommen ist, wird das Altrohr nach Beendigung des Trenn- und Überfahrvorgangs aus dem Hüllrohr oder dem Produktenrohr entnommen. Bei Anwendung des Hüllrohres wird das Produktenrohr an das Altrohr oder an das Seil angekoppelt und gleichzeitig mit dem Herausziehen des Altrohres in das Hüllrohr eingezogen.
Die Halbschalen können beim Austritt aus dem Hüllrohr oder Produktenrohr gebogen und im Ganzen herausgezogen werden. Das Trennen und Überfahren des Altrohres erfolgt gleichzeitig.

Die erfindungsgemäße Vorrichtung zur Durchführung des Verfahrens besteht aus an einem Trägerkörper befestigten mechanischen Trennvorrichtungen im Innern des Altrohres, die zugleich einen das Altrohr umschließenden Überfahrkopf tragen.
An diesen Überfahrkopf ist das Hüllrohr oder das künftige Produktenrohr angeschlossen.

Mit dem erfindungsgemäßen Verfahren und der Vorrichtung zur Durchführung des Verfahrens erfolgt der Auswechselungsprozeß in nur einem Arbeitsgang mit dem das Trennen des Altrohres, das Eingleiten der Trennvorrichtungen des Überfahrkopfes und das Überfahren des Altrohres bei gleichzeitiger Aufweitung des das Altrohr umgebenden Erdreiches und das Ankoppeln und Einziehen des Hüllrohres oder des neuen Produktenrohres ermöglicht wird.

Die natürlichen Anlagen, wie Bäume und Grünflächen und die künstlichen Anlagen, wie Gehwege, Gebäudeteile, Leitungen und Straßen werden geschont und bauzeitlich bedingte Verkehrsbeeinträchtigungen minimiert.

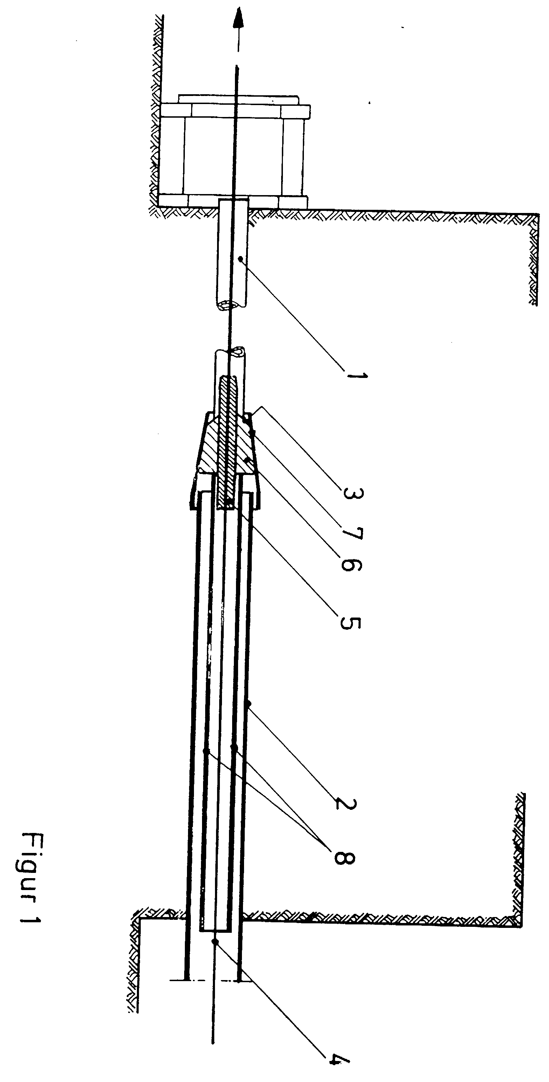

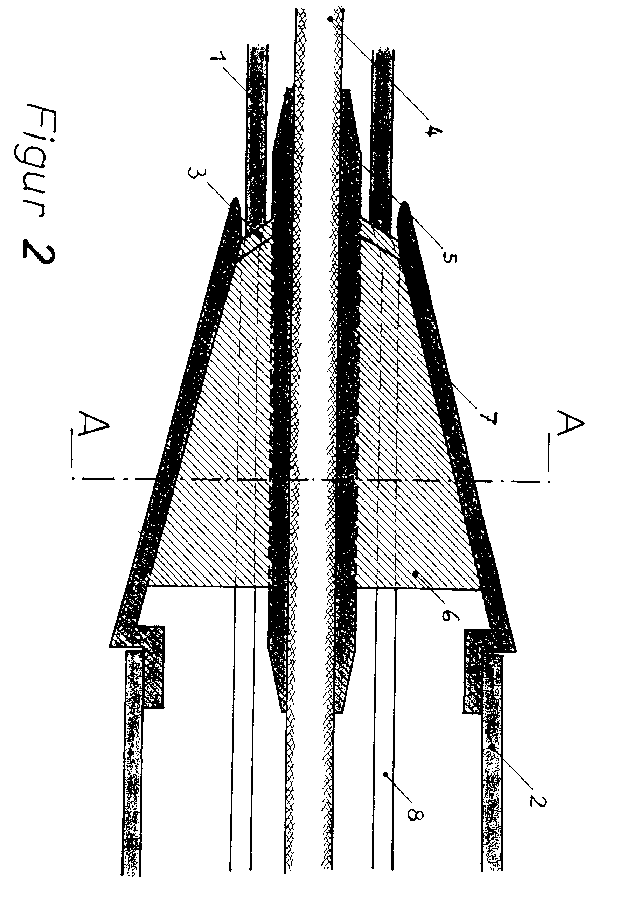

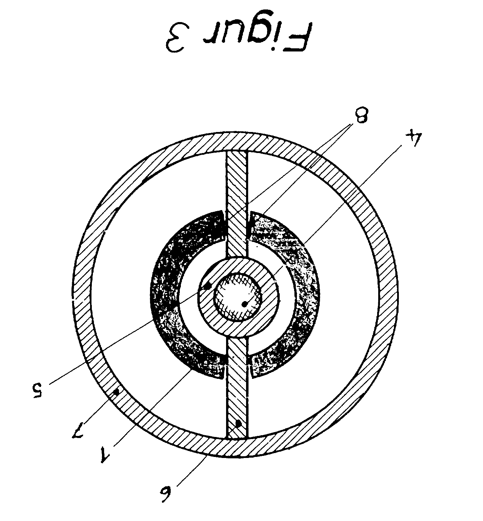

Die Erfindung wird anhand der in den Figuren 1 bis 3 dargestellten Beispiele näher erläutert.
Die Figur 1 zeigt ein Schema des Verfahrensablaufs mit den gleichzeitigen Schritten Trennen, Überfahren und Einziehen eines Hüllrohres.
Dabei wird der Trägerkörper 5 durch das Altrohr 1 gezogen. Die vorn als Schneiden 3 ausgebildeten Trennvorrichtungen 6 schneiden ein Altrohr 1 aus Blei oder Kunststoff in Längsrichtung auf und gleiten als Träger des Überfahrkopfes 7 in die Trennflächen 8 ein.
Der Überfahrkopf 7 erzeugt durch Verdrängen des Bodens einen Hohlraum um das Altrohr 1 herum, in den das an den Überfahrkopf 7 angeschlossene Hüllrohr 2 eingezogen wird. Wenn das Hüllrohr 2 die Maschinenbaugrube erreicht hat, wird das in Halbschalen getrennte Altrohr 1 aus dem Hüllrohr 2 herausgezogen. Die Figur 1 stellt zugleich das Einbringen eines neuen Produktenrohres 2 dar, wenn dieses statt des Hüllrohres 2 unmittelbar an den Überfahrkopf 7 angekoppelt ist.

Figur 2 zeigt einen Längsschnitt durch die erfindungsgemäße Vorrichtung mit den als Schneiden 3 ausgebildeten Trennvorrichtungen 6, dem am Trägerkörper 5 befestigten Überfahrkopf 7 und der Befestigung eines Hüllrohres 2.

In Figur 3 ist die erfindungsgemäße Vorrichtung im Querschnitt dargestellt. Schnitt A-A zeigt von innen nach außen das Seil 4, den Trägerkörper 5 mit den Trennvorrichtungen 6, an deren Vorderkanten Schneiden angearbeitet sind, das Altrohr 1 und den Überfahrkopf 7.

## Patentansprüche

1. Verfahren zum grabenlosen Auswechseln erdverlegter Blei- oder Kunststoffrohre unter Verwendung von Zug-, Längstrenn- und Aufweitvorrichtungen
dadurch gekennzeichnet, daß
das zu entfernende Altrohr (1) durch in einen Überfahrkopf (7) integrierte messerartige Trennvorrichtungen (6) von innen aufgeschnitten wird, wobei die mit einem Trägerkörper (5) verbundenen, von einem an sich bekannten Seil (4) gezogenen Trennvorrichtungen (6) zwischen den Trennflächen (8) hindurchgleiten, das Altrohr (1) durch ein an den Überfahrkopf (7) angekoppeltes Hüll- oder Produktenrohr (2) überfahren, aus dem Hüll- oder Produktenrohr (2) entfernt, und ein neues Produktenrohr (2) gleichzeitig in das Hüllrohr (2) eingebracht wird.

2. Vorrichtung zur Durchführung des Verfahrens nach Anspruch 1
dadurch gekennzeichnet, daß
an einem Trägerkörper (5) im Inneren des Altrohres (1) in Zugrichtung vorn als Schneiden (3) ausgebildete mechanische Trennvorrichtungen (6) angeordnet sind, die mit einem das Altrohr (1) umschließenden Überfahrkopf (7) verbunden sind, an den ein Hüllrohr (2) oder das künftige Produktenrohr (2) angeschlossen ist.

3. Vorrichtung nach Anspruch 2,
dadurch gekennzeichnet, daß
der Überfahrkopf (7) vorzugsweise konisch ausgebildet ist.

## Claims

1. A method for the trench-free replacement of buried lead or plastic tubes using towing, longitudinal cutting, and flaring devices,
characterized in that
the old tube (1) to be removed is cut open from the inside by blade-like cutting devices (6) integrated in a travelling head (7), wherein the cutting devices (6) which are connected to a carrier body (5) are towed by means of a rope (4) known per se to slide along between the cutting areas (8), and wherein the old tube (1) is enveloped by an enveloping or product tube (2) connected to the travelling head (7) and removed from the enveloping or product tube (2) while at the same time a new product tube (2) is inserted into the enveloping tube (2).

2. A device for applying the method according to Claim 1,
characterized in that
mechanical cutting devices (6) formed as blades (3) at the front side in the towing direction are arranged on a carrier body (5) inside the old tube (1) which devices are connected to a travelling head (7) enveloping the old tube (1) to which travelling head an enveloping tube (2) or the new product tube (2) is connected.

3. A device according to Claim 2,
characterized in that
the travelling head (7) is preferably formed to be of a conical shape.

## Revendications

1. Technique de remplacement sans fouille de conduites enterrées en plomb ou en matière synthétique recourant à des dispositifs de traction, de séparation longitudinale et d'extension
**caractérisée en ce que**
la conduite usée (1) à retirer est découpée de l'intérieur par un dispositif de séparation (6) en forme de lame intégrée à une tête de recouvrement (7), les dispositifs de séparation (6) reliés à un corps porteur (5) et tractés par un câble (4) connu en soi coulissant entre les surfaces de séparation (8), la conduite usée (1) étant enveloppée par une gaine ou une conduite finie (2) couplée à la tête de recouvrement (7), puis extraite de la gaine ou de la conduite finie (2) tandis qu'une nouvelle conduite finie (2) est simultanément introduite dans la gaine (2).

2. Dispositif pour la mise en oeuvre de la technique selon revendication 1
**caractérisé en ce que**
des dispositifs mécaniques de séparation (6) formés comme lames de coupe (3) sont disposés en avant, relativement au sens de traction, d'un corps porteur (5) à l'intérieur de la conduite usée (1), lesdits dispositifs de séparation étant reliés à une tête de recouvrement (7) entourant la conduite usée (1), une gaine (2) ou la future conduite finie (2) étant raccordée à ladite tête de recouvrement.

3. Dispositif selon revendication 2
**caractérisé en ce que**
la tête de recouvrement (7) est préférentiellement de forme conique.
